# EUROPÄISCHE PATENTSCHRIFT

(11) **EP 3 209 120 B1**
(45) Veröffentlichungstag und Bekanntmachung des Hinweises auf die Patenterteilung: **23.12.2020**
(21) Anmeldenummer: 15787525.3
(22) Anmeldetag: 23.10.2015
(51) Int. Cl.: A01K 27/00

(54) **HUNDEGESCHIRR**
DOG HARNESS
HARNAIS POUR CHIEN

(30) Priorität: 23.10.2014 DE 202014008414 U
(43) Veröffentlichungstag der Anmeldung: 30.08.2017
(73) Patentinhaber: Bednarz, Nina Barbara, 40489 Düsseldorf (DE)
(72) Erfinder: Bednarz, Nina Barbara, 40489 Düsseldorf (DE)
(74) Vertreter: Weisbrodt, Bernd
(86) Internationale Anmeldenummer: PCT/EP2015/074582
(87) Internationale Veröffentlichungsnummer: WO 2016/062852

(56) Entgegenhaltungen:
- EP-A2- 1 809 097
- DE-U1-202012 000 645
- GB-A- 1 027 045
- GB-A- 2 407 471
- US-A- 5 199 383
- US-A- 5 247 905

## Beschreibung

Die Erfindung betrifft ein Hundegeschirr, umfassend einen Bauchgurt, welcher Bauch und Widerrist eines Hundes im Bereich des Rumpfes umschließt, und einen Brustgurt, welcher über der Brust des Hundes, vorzugsweise auf der Höhe der Schulterblätter des Hundes und unterhalb des Kehlkopfes des Hundes, angeordnet ist, wobei der Brustgurt ein Halteelement zur Befestigung einer Leine aufweist.

Aus dem Stand der Technik sind Hundegeschirre als Alternative zum Hundehalsband bekannt. Ein Hundegeschirr umschließt in der Regel den Bauch und die Brust eines Hundes, verläuft entlang der Halsseiten des Hundes und verfügt über ein im Rückenbereich angeordnetes Halteelement zur Befestigung einer Leine.

Nachteilig bei der Anwendung dieser Hundegeschirre ist, dass der sogenannte Oppositionsreflex eines Hundes ausgelöst wird. Der Oppositionsreflex betrifft das Verhalten eines Hundes verstärkt in Vorwärtsrichtung zu ziehen, wenn der Hund einen Gegenzug durch die Leine in Rückwärtsrichtung spürt. Dies ist insbesondere bei der Leinenführung des Hundes, beispielsweise beim Spazieren gehen dysfunktional. Dieser Oppositionsreflex eines Hundes ist natürlich ausgeprägt und instinktiv verankert und wird insbesondere bei Schlittenhunden ausgenutzt, für die derartige Hundegeschirre ursprünglich entwickelt wurden. Kommt es zu einer Straffung des Hundegeschirrs, reagiert ein Hund instinktiv mit einer Flucht nach vorne, also einem Zugverhalten in Vorwärtsrichtung, um die Eingrenzung seiner Bewegungsfreiheit zu umgehen. Hierdurch bedingt ist also auch das Verhalten eines Hundes, sich selbstständig aus dem Hundegeschirr befreien zu wollen, da die durch das Hundegeschirr bedingte Eingrenzung der Bewegungsfreiheit des Hundes und dem ausgelöstem Oppositionsreflex eine höchst stressige Situation für den Hund ist. Neben dem Zugverhalten kann durch den Oppositionsreflex auch aggressives Verhalten des Hundes, die sogenannte Leinenaggression verstärkt werden, da durch das Hundegeschirr die Eingrenzung der Bewegungsfreiheit Unsicherheit im Hund auslöst. Der Hund steht folglich unter starkem Stress.

Bei der gewöhnlichen Hundehaltung ist starkes und ruckartiges Zugverhalten eines Hundes in Vorwärtsrichtung folglich unerwünscht, und kann zum einen zu einem Sturz des Leinenführers führen und zum anderen aber auch zu Verletzungen des Hundes. Es besteht somit die Gefahr von Verletzungen sowohl für den Leinenführer als auch für den Hund.

Die bekannten Hundegeschirre verursachen eine Druckverlagerung auf die Wirbelsäure, sowie auf den Halsbereich des Hundes, welche neben langfristigen physischen Folgen für den Hund auch psychische Lernmechanismen in Gang setzen, welche das Zugverhalten des Hundes in Vorwärtsrichtung verstärken und konditionieren.

Zudem führt die Verwendung eines Hundegeschirrs durch die Straffung des Hundegeschirrs bei einem Zugverhalten des Hundes in Vorwärtsrichtung durch eine Straffung des Hundegeschirrs zu einer Druckverlagerung auf bestimmte Muskelpartien des Hundes, wobei insbesondere eine Abschnürung der Luftröhre, wie dies häufig auch bei Hundehalsbändern auftritt, durch die bekannten Hundegeschirre vermieden werden soll. Eine Abschnürung der Luftröhre entsteht vor allen Dingen durch einen Druck auf den Kehlkopf des Hundes - das sogenannte Röcheln und/oder Husten des Hundes -, wobei es neben der Abschnürung der Luft auch zu einer Kehlkopfreizung bzw. -entzündung für den Hundes kommen kann. Derartige Gesundheitsstörungen des Hundes werden auch als technopatische Gesundheitsstörungen bezeichnet. Jedoch verursacht insbesondere eine falsche Positionierung des Hundegeschirrs am Torso des Hundes, beispielsweise durch ein Verrutschen des Hundegeschirrs auf die Schulter oder in den Halsbereich des Hundes diese technopathischen Gesundheitsstörungen, wobei ein verstärkter Druck auf die Wirbelsäule und andere sensitive und empfindliche Körperteile und -bereiche des Hundes ausgeübt wird.

Doch auch bei den aus dem Stand der Technik bekannten Hundegeschirren kann es zu einer Abschnürung der Luftröhre durch Druck auf den Kehlkopf kommen, da sich die bekannten Hundegeschirre aufgrund des in der Regel zu weichen und flexiblen Materials verformen und somit verrutschen und auf den Kehlkopf des Hundes drücken.

Ferner sind aus dem Stand der Technik Hundegeschirre bekannt, welche die Schnauze eines Hundes umfassen. Bei einem Zugverhalten eines Hundes in Vorwärtsrichtung führen diese Hundegeschirre dazu, dass die Schnauze des Hundes nach unten gezogen wird. Dies verursacht eine unnatürliche Kopfdrehung für den Hund. Folglich wird dadurch eine unnatürliche Sanktion für den Hund herbeigeführt, welche für einen Hund kognitiv nicht erfassbar ist. Es kann kein nachhaltiger Lerneffekt für den Hund entstehen, sondern es geschieht eine Unterdrückung des Verhaltens des Hundes durch eine negative Verstärkung. Es wird also eine negative Verstärkung bei diesen Hundegeschirren dazu genutzt, das Zugverhalten des Hundes in Vorwärtsrichtung zu unterbinden. Nachteilig ist, dass die Anwendung von unnatürlichen Sanktionen und von negativer Verstärkung zur Konditionierung des Hundes widersprüchlich und paradox ist. Die Folge ist, dass der Hund massiv gestresst wird und keine adäquate Koordinierung erfolgen kann.

Ferner ist aus der EP 1 809 097 B1 und der WO 2004/002432 A2 jeweils ein Hundegeschirr bekannt, bei welchem über einen den Hals des Hundes umgreifenden Gurt im vorderen Halsbereich des Hundes ein Halteelement zur Ankopplung einer Leine vorgesehen ist. Ein den Rumpf des Hundes umschließender Bauchgurt besteht aus zwei Teilelementen, die jeweils über ein ringförmiges Verbindungselement, wobei ein Verbindungselement an einer Seite des Hundes ist, verbunden sind. Der den Hals des Hundes umgreifende Gurt im vorderen Halsbereich des Hundes ist ebenfalls mit den an den Seiten des Hundes befindlichen ringförmigen Verbindungselementen verbunden, wobei sowohl die Enden der Teilelemente des Bauchgurts, als auch die jeweiligen Enden des Brustgurts fest mit dem ringförmigen Verbindungselement verbunden sind. Nachteilig hieran ist die sich ergebende unveränderliche Positionierung des Hundegeschirrs im Halsbereich des Hundes. Diese Geschirre weisen lediglich eine Längenverstellung des Bauchgurts auf. Eine artgerechte Anpassung des Hundegeschirrs kann nicht gewährleistet werden, so dass die bei einem Zugverhalten des Hundes in Vorwärtsrichtung wirkende Kraft durch das Geschirr schädlich für den Hund sein kann. Eine optimale Anpassung eines Hundegeschirrs an den Hund ist jedoch essentiell, wobei ein Fehlen der optimalen Anpassbarkeit im Wesentlichen zwei Hauptfolgen für den Hund hat: Es können negative gesundheitliche Folgen für den Hund entstehen, wobei ein zu niedrig positioniertes Hundegeschirr zu einem Stolpern des Hundes führt und ein zu hoch positioniertes Hundegeschirr eine Luftabschnürung für den Hund zur Folge hat. Zudem können funktionale Einschränkungen hervorgerufen werden, da das durch das Hundegeschirr hervor gerufene Reiz-Reaktion-Schema für den Hund nicht erfassbar ist. Der durch das Hundegeschirr abgegebene Reiz ist für den Hund unverständlich, so dass Verhaltensstörungen, wie die Leinenaggression weiter getriggert werden. Die Verstellbarkeit des Hundegeschirrs ist zudem aufgrund der Vielzahl an bekannten Hunderassen und deren unterschiedlichen körperlichen Gegebenheiten wünschenswert.

Aus der DE 20 2010 014 102 U1 ist ferner ein Hundegeschirr bekannt, welches sowohl, wie vorstehend ausgeführt, ein Halteelement zur Ankopplung einer Leine im vorderen Halsbereich des Hundes als auch ein weiteres Halteelement am Rücken des Hundes vorsieht. Nachteilig ist, dass das bei einem Zugverhalten des Hundes in Vorwärtsrichtung sowohl von dem am Rücken angeordneten Halteelement, als auch durch das Halteelement im vorderen Halsbereich des Hundes durch das Ziehen ein Signal an den Hund gesendet wird. Dies stellt ein für den Hund missverständliches Signal dar, wobei durch den von der Leine verursachten Zug am Rücken des Hundes der Oppositionsreflex ausgelöst wird, und zudem durch einen weiteren Zug am Hals des Hundes der Hund in Richtung des Leinenführers gezogen wird. Der Hund kann derartige Signale nicht zuordnen. Es werden, wie vorstehend erläutert, Verhaltensstörungen unbewusst getriggert, die aber von dem Leinenführer ungewollt sind. Eine seitens des Leinenführers gewünschte Konditionierung des Hundes ist mit diesen Hundegeschirren nicht möglich.

Des Weiteren offenbart die GB 2 407 471 A ein Geschirr für ein Vierbeiner mit einem Brustgurt, das bei Verwendung des Geschirrs quer über der Brust des Tieres vor den Vorderbeinen liegt, wobei das Geschirr eine Befestigung für einen Führungsriemen beinhaltet, wobei die Befestigung verschiebbar am Brustgurt montiert ist, um sich dort entlang zu bewegen. Jedes Ende des Brustgurtes ist an einer Kofferschleife befestigt, die im Gebrauch des Gurtzeuges um den Kofferraum des Tieres hinter den Vorderbeinen verläuft. Die Kofferschleife umfasst einen hinteren Gurt, der bei Verwendung des Gurtzeugs über der Rückseite des Tieres liegt und an einem unteren Gurt befestigt ist, der bei Verwendung des Gurtzeugs hinter den Vorderbeinen unter dem Tier hindurchgeht.

Die GB 1 027 045 A offenbart ein Geschirr für Hunde oder andere Tiere umfassend einen Gürtel, der den Körper des Tieres rückwärts der Vorderbeine umgibt und lösbare Befestigungsmittel zum lösbaren Verbinden von Endabschnitten davon und Mittel aufweist, die ein oder mehrere an dem Gürtel befestigte Bänder umfassen und so angeordnet sind, dass sie sich über und/oder über den Vorderteil des Körpers erstrecken, um die Rückwärtsverschiebung des Gürtels zu begrenzen. Dabei umfassend die Befestigungsmittel zwei Befestigungselemente, welche jeweils eines an jedem der Endabschnitte des Riemens befestigt und so angeordnet sind, dass sie durch das Einsetzen einer Zunge oder Lasche auf einem Element durch eine Öffnung in dem anderen Element lösbar verbunden sind, wobei die Zunge oder Lasche auch eine Öffnung für einen Halter aufweist, die das Herausziehen der Zunge oder Lasche aus der Öffnung verhindert, und einen Halter, der direkt oder indirekt mit dem Riemen verbunden und so angeordnet ist, dass er abnehmbar in die letztgenannte Öffnung eingesetzt werden kann.

Die EP 1 809 097 A2 offenbart ein Hundegeschirr bestehend aus einem Torso-Gurt, der die Brust eines Hundes umschließt, verbunden mit einem Brustgurt, der um die Brust eines Hundes verläuft, und einem Schultergurt, der über den Rücken eines Hundes verläuft. Der Brustgurt ist mit einer begrenzten Gleitschlaufe ausgestattet. Wenn eine Leine an der Leine befestigt ist, bewirkt ein gerichteter Zug an der Leine, dass die Leine in Zugrichtung gleitet, die Begrenzungsschlaufe zur Seite zieht und den Zug aus der Mitte der Brust eines Hundes bewegt, wodurch der Oppositionsreflex verringert wird.

Die US 5,247,905 A offenbart ein Tiergeschirr zum Festhalten eines Tieres mit einer Leine, die einen vorderen Riemen, einen Körperriemen und einen breiten Begrenzungsriemen aufweist. Jedes Ende des vorderen Riemens ist mit einem Verbindungselement am Karosserieband befestigt, das Schlitze zur Aufnahme des vorderen Riemens und des Körperriemens aufweist. Das breite Begrenzungsband ist so konzipiert, dass es zwischen den Vorderbeinen des Tieres hindurchgeht und an einem Ende am vorderen Band und am anderen Ende am Karosserieband befestigt ist. Mindestens ein Ringverbindungselement ist an einem oberen Teil des Körperriemens vorgesehen, um eine Leine daran zu befestigen.

Nachteilig bei dem aus dem Stand der Technik bekannten Hundegeschirr ist ferner, dass die Materialbeschaffenheit mangelhaft ist. Die verwendeten Gurte sind in der Regel zu schmal, so dass diese von einem Hund kaum wahrnehmbar sind. Zudem verformen sich die Gurte durch das verwendete dünne und damit sehr flexible Material zu stark, so dass die Gurte leicht verrutschen. Eine essentielle optimale Positionierung der Gurte des Hundegeschirrs ist somit nicht möglich.

Sämtliche aus dem Stand der Technik bekannten Hundegeschirre sind also mit Nachteilen verbunden, beispielsweise, indem unnatürliche Sanktionen für den Hund, wie die Abschnürung der Luftzufuhr (Würgen), das Zufügen von Schmerzen, beispielsweise durch Stacheln, eine unnatürliche Bewegung des Kopfes oder missverständliche und widersprüchliche Reiz-Reaktion-Schemata für den Hund herbeigeführt werden, wodurch Stress mit Folgen für den Hund verursacht wird, und welche aber grundsätzlich ungeeignet sind, das Zugverhalten des Hundes in Vorwärtsrichtung zu verhindern. Darüber hinaus kann dies zu Aggressionen des Hundes führen. Zudem ist durch eine unzureichende Einstellbarkeit der bekannten Hundegeschirre keine einfache adäquate Anpassung an die individuellen körperlichen Gegebenheiten des Hundes möglich.

Ausgehend von diesem Stand der Technik besteht die Aufgabe der Erfindung darin, die aus dem Stand der Technik bekannten Nachteile zu vermeiden und ein Hundegeschirr bereitzustellen, dass insbesondere den Oppositionsreflex des Hundes nicht auslöst und auf unnatürliche Sanktionen für den Hund verzichtet und somit stressfrei für den Hund ist, sowie individuell auf den Hund einstellbar und damit an dem Hund positionierbar ist.

Diese Aufgabe wird gelöst durch ein Hundegeschirr nach Anspruch 1, umfassend: einen Bauchgurt, welcher Bauch und Widerrist eines Hundes im Bereich des Rumpfes umschließt, und einen Brustgurt, welcher über der Brust des Hundes, vorzugsweise auf der Höhe der Schulterblätter und unterhalb des Kehlkopfes des Hundes, angeordnet ist, wobei der Brustgurt ein Halteelement zur Befestigung einer Leine aufweist, dadurch gekennzeichnet, dass die Enden des Brustgurts derart mit dem Bauchgurt verbunden sind, dass der Brustgurt entlang des Bauchgurts über einen Reibschluss fixiert verstellbar ist, wobei der Reibschluss über eine an den Enden des Brustgurts ausgebildete Schlinge realisiert wird, welche den Bauchgurt unmittelbar, das heißt passgenau, umgreift, und bei Überwindung einer entgegenwirkenden Reibkraft durch den Reibschluss eine Verschiebung der Enden des Brustgurts entlang des Bauchgurts ermöglicht wird.

Dabei liegt der Erfindung die Erkenntnis zugrunde, dass der Stress für den Hund durch die aus dem Stand der Technik bekannten Hundegeschirre, die Unsicherheit und eine Flucht nach vorne bewirken, vor allen Dingen auf das Auslösen des Oppositionsreflexes zurückzuführen ist. Das natürliche Bedürfnis des Hundes in Vorwärtsrichtung zu ziehen sobald der Hund durch ein Hundegeschirr einen Zug von hinten spürt, und die Leinenaggression des Hundes kann also unterbunden werden, indem das erfindungsgemäße Hundegeschirr die kommunikative Aufgabe übernimmt und ein klares Kommunikationssignal an den Hund übermittelt, wobei der Oppositionsreflex nicht ausgelöst wird. Dies kann entgegen der aus dem Stand der Technik bekannten Lösungen auch ohne Nachteile beziehungsweise Sanktionen für den Hund erfolgen. Erfindungsgemäß wird dies erreicht, indem bei einem Zugverhalten des Hundes in Vorwärtsrichtung ausschließlich ein Signal ausgesendet wird, wobei das Signal den Oppositionsreflex nicht triggert und auf instinktiver Ebene den Hund zu einer Stoppreaktion, also einem Unterbinden des Zugverhaltens in Vorwärtsrichtung verleitet. Langfristig ist der Hund sensibilisierbar, so dass der Hund auf jegliche Bewegungen des Halteelements durch die daran anordenbare Leine reagiert und zum Hundehalter schaut. Durch die Anordnung des Halteelements an dem Brustgurt des erfindungsgemäßen Hundegeschirrs erfolgt eine Führung des Hundes von vorne, wobei eine derartige Führung wesentlich natürlicher aufgrund der entsprechenden Körperausrichtung des Hundes und somit angenehmer für den Hund ist. Eine Führung von vorne unterstützt eine Konditionierung des Hundes durch positive Verstärkung und hat eine weit höhere Akzeptanz durch den Hund. Dies ermöglicht die Verwendung des erfindungsgemäßen Hundegeschirrs auch bei verhaltensauffälligen Hunden, die beispielsweise Angstsymptomatiken oder andere psychogene Symptomatiken aufweisen.

Ein Signal im Sinne der vorliegenden Erfindung ist eine an den Hund übermittelte Botschaft, Kommando oder dergleichen, welches der Hund wahrnimmt und auf dieses reagiert. Erfindungsgemäß ist dabei vorgesehen, dass bei einem entsprechenden Zugverhalten des Hundes in Vorwärtsrichtung dieser bei Verwendung des erfindungsgemäßen Geschirrs stehen bleibt beziehungsweise sich in Richtung des Leinenführers dreht. Je stärker der Hund zieht, desto größer wird der durch das Zugverhalten verursachte Drehimpuls, so dass der Hund bei einem sehr starken Zugverhalten eine Drehung von bis zu etwa 180° durch den Druck auf eine der Seiten des Hundes durch das Hundegeschirr durchführt. Im Folgenden wird das an den Hund übermittelte Signal auch mit Widerstandssignal bezeichnet. Durch das Widerstandssignal als ausgelösten Reiz und einem Stehenbleiben beziehungsweise einer Drehung des Hundes als Reaktion wird das seitens des Hundes angestrebte Ziel - sich in Vorwärtsrichtung fortzubewegen - nicht erreicht und dem Hund wird die Belohnung - das angestrebte Ziel zu erreichen - vorenthalten. Es wird also eine Reiz-Reaktions-Kette ausgelöst, die im Ergebnis bei dem Hund zu einer Aufgabe des Zugverhaltens führt. Dadurch, dass der Hund bei einem Zugverhalten durch das erfindungsgemäße Hundegeschirr lediglich maximal bei einem starken Zugverhalten in Vorwärtsrichtung in Richtung des Leinenführers gedreht wird, erfährt der Hund keinerlei negative körperliche Beeinträchtigung oder Bestrafung und insbesondere wird der Oppositionsreflex nicht ausgelöst. Der Hund lernt also, dass es keinen Sinn hat, stark in Vorwärtsrichtung zu ziehen, da er anstatt das angestrebte Ziel zu erreichen, lediglich Stehen bleibt beziehungsweise gedreht wird. Auf missverständliche Signale, die beispielsweise durch zwei gleichzeitig abgegebene und entgegengesetzte Signale hervorgerufen werden, kann verzichtet werden. Der Hund wird durch ein gezielt eingesetztes Signal durch das erfindungsgemäße Hundegeschirr konditioniert.

Das Widerstandssignal wird durch die optimale Anpassbarkeit des erfindungsgemäßen Hundegeschirrs für den Hund eindeutig kognitiv, wobei eine optimale Verteilung der Zugkraft sichergestellt wird. Dabei verhindert die Positionierung des Bauch- und Brustgurtes des Hundegeschirrs eine auf den Halsbereich des Hundes wirkende Zugkraft. Hierzu sind die Enden des Brustgurts des Hundegeschirrs vorteilhafterweise derart mit dem Bauchgurt verbunden, dass der Brustgurt entlang des Bauchgurts fixiert verstellbar ist.

Das erfindungsgemäße Hundegeschirr verzichtet folglich auf die Auslösung des Oppositionsreflexes und arbeitet nach dem Prinzip der klassischen Konditionierung. Wenn ein Hund in Vorwärtsrichtung zieht, erreicht er bei Verwendung des erfindungsgemäßen Hundegeschirrs nicht sein Ziel, sondern bleibt stehen oder bei einem sehr starken Zugverhalten des Hundes in Vorwärtsrichtung wird eine Drehung von etwa 180° herbeigeführt, wobei im Ergebnis der Leinenführer angesehen wird. Bei einem weniger starken Zugverhalten fällt die Drehung des Hundes entsprechend kleiner aus beziehungsweise der Hund bleibt lediglich stehen, wobei durch das ausgelöste Widerstandssignal, welches der Hund durch einen Widerstand durch das erfindungsgemäße Hundegeschirr erfährt, das Resultat erreichbar ist, dass der Hund insbesondere das starke und ruckartige Zugverhalten in Vorwärtsrichtung aufgibt. Dabei nutzt das erfindungsgemäße Hundegeschirr einen natürlichen Instinkt des Hundes, wobei der Leinenführer mit der Leinenbewegung die Richtung vorgibt, zur Konditionierung des Hundes aus. Hierdurch wird die Bindung zwischen Hund und Leinenführer merklich gestärkt, da der Hund lernt der Führung durch den Leinenführer zu vertrauen. Langfristig wird das zwischen Hund und Leinenführer aufgebaute Vertrauen grundlegend gefestigt, der bei Verwendung des erfindungsgemäßen Hundegeschirrs ausschließlich ein klar und eindeutig verständliches Widerstandssignal übermittelt wird, also das für die Konditionierung essentielle Reiz-Reaktion-Schema für den Hund erfassbar ist. Dies wird zudem dadurch verstärkt, dass der Hund keine negativen Sanktionen erfährt. Im Ergebnis wird ein Hund durch die Abgabe der Führungsrolle an den Leinenführer merklich entspannter, so dass die Verwendung eines erfindungsgemäßen Hundegeschirrs auch eine Anti-Stress-Funktion für den Hund erfüllt.

Das erfindungsgemäße Hundegeschirr wird dabei vorzugsweise derart positioniert, dass die Enden des Brustgurts jeweils im Bereich der Schulterblätter des Hundes am Bauchgurt gehaltert sind. Je mehr dabei der Verbindungsbereich zwischen Brustgurt und Bauchgurt des Hundegeschirrs auf den Schulterblättern des Hundes aufliegt, umso weniger wird ein Hund ziehen, da das durch das Hundegeschirr an den Hund gesendete Widerstandssignal schneller übermittelt wird. Folglich kann also eine Sensibilisierung des Hundes an das erfindungsgemäße Geschirr erfolgen, indem bei stark ziehenden Hunden zunächst das Hundegeschirr derart eingestellt wird, dass der Brustgurt tiefer an dem Bauchgurt positioniert ist, so dass im Rahmen der Konditionierung des Hundes Schritt für Schritt der Brustgurt gegenüber dem Bauchgurt höher eingestellt werden.

Der Ausdruck "fixiert verstellbar" im Sinne der Erfindung umfasst eine Halterung des Brustgurts an dem Bauchgurt vorzugsweise über einen Reibschluss, wobei bei Überwindung der entgegenwirkenden Reibkraft durch den Reibschluss eine Verschiebung der Enden des Brustgurts entlang des Bauchgurts ermöglicht wird. Im Rahmen der normalen Verwendung ist der Brustgurt an dem Bandgurt des Hundegeschirrs fixiert. Vorteilhafterweise wird der Reibschluss über eine an den Enden des Brustgurts ausgebildete Schlinge realisiert, die im Wesentlichen den Bauchgurt unmittelbar umgreift. Vorzugsweise ist die Schlaufe derart in ihrer Größe ausgelegt, dass ein Reibschluss zwischen dem Brustgurt und dem Bauchgurt gegeben ist. Die ausgebildete Schlinge ist also vorteilhafterweise passgenau ausgebildet. Über eine die Schlinge verschließende Verbindung, beispielsweise eine Schraubverbindung in Form einer Buchschraube oder einer Vernähung oder dergleichen ist die Schlinge derart ausgelegt, dass die innere Oberfläche in etwa der umschlossenen Oberfläche, und damit der Breite des Bauchgurts entspricht. Somit wird durch eine Überwindung der Reibkraft zwischen der Schlinge des Brustgurts und dem Abschnitt des Bauchgurts im Ergebnis eine fixierte Verstellbarkeit erreicht. Die Enden des Brustgurts sind lediglich mit zwei Verbindungselementen versehen, wodurch der Brustgurt entlang des Bauchgurts positionierbar ist.

Ferner wird im Sinne der vorliegenden Erfindung unter einer fixierten Verstellbarkeit verstanden, dass vorzugsweise ein Klemmelement an den Enden des Brustgurts angeordnet ist, wobei über eine Klemmverbindung der Brustgurt an dem Bauchgurt angeordnet ist. Durch ein Lösen der Klemme kann der Brustgurt entlang des Bauchgurts verstellt werden und über ein anschließendes Feststellen der Klemme wiederrum an dem Bauchgurt fixiert werden. Vorteilhafterweise sind weitere Verbindungselemente mit einer Fixier- beziehungsweise Arretiermöglichkeit vorgesehen, die jeweils eine fixierte Verstellbarkeit des Brustgurts entlang des Bauchgurts ermöglichen.

Ein weiterer Vorteil durch die Verschiebbarkeit des Brustgurts entlang des Bauchgurts ist, dass der Bereich des Hundegeschirrs, durch den der Kopf des Hundes hindurch ragt, verengt werden kann, so dass ein eigenständiges Befreien des Hundes aus dem Hundegeschirr heraus verhindert wird. Dieser Drang zum eigenständigen Befreien wird ebenfalls durch den Oppositionsreflex ausgelöst. Zudem ermöglicht die Verschiebbarkeit des Brustgurts es, die ausgebildete Öffnung des erfindungsgemäßen Hundegeschirrs, durch welchen der Kopf des Hundes hindurchragt, insbesondere zum Anlegen des erfindungsgemäßen Hundegeschirrs zu vergrößern, wodurch das erfindungsgemäße Hundegeschirr auch bei traumatisierten Hunden bzw. bei verhaltensauffälligen Hunden gut verwendbar ist.

In einer bevorzugten Ausgestaltung der Erfindung ist der Brustgurt im Wesentlichen in einem Winkel von etwa 90° zum Bauchgurt angeordnet. Dies stellt eine korrekte Positionierung des Brustgurts an dem Hund sicher, so dass das an den Hund übermittelte Widerstandssignal hinsichtlich des Zugverhaltens des Hundes ohne negative körperliche und psychische Bestrafung für den Hund übermittelbar ist. Auch ein Verfangen einer Leine zwischen den Hundebeinen ist durch eine korrekte Positionierung des Brustgurts vermeidbar bzw. tritt im Vergleich zu den bekannten Hundegeschirren nicht auf.

Eine weitere Ausgestaltung der Erfindung sieht vor, dass das Halteelement entlang des Brustgurts, vorzugsweise im Wesentlichen in horizontaler Richtung, verschiebbar ist. Das derart ausgebildete Hundegeschirr lässt sich folglich an die körperlichen Gegebenheiten des Hundes individuell anpassen.

Eine vorteilhafte Ausgestaltung der Erfindung sieht vor, dass der Brustgurt ein Anschlagelement aufweist, so dass das Halteelement nicht über das Anschlagelement hinaus verschiebbar ist. Durch das Anschlagelement wird die Verschiebbarkeit des Halteelements entlang des Brustgurts vorteilhafterweise beschränkt. Das Widerstandssignal bei einem Zugverhalten des Hundes in Vorwärtsrichtung, welches durch einen Zug der Leine verursacht wird und an den Hund gesendet wird, wird erst ausgelöst, wenn das Halteelement sich nicht weiter verschieben lässt. Je weiter sich das Halteelement horizontal entlang des Brustgurts verschieben lässt, umso später wird der Impuls als Reiz für den Hund ausgelöst und umso später erfolgt das Widerstandssignal, welches ein Zugverhalten des Hundes in Vorwärtsrichtung als Reaktion hervorruft. Eine geringe Verschiebbarkeit des Halteelements ist durchaus gewünscht, insbesondere bei der Verwendung des erfindungsgemäßen Hundegeschirrs bei größeren Hunderassen, da diese Hunde eine größere Schrittlänge haben und mehr Bewegungsspielraum des Halteelementes benötigen, so dass kleinere Bewegungen hinsichtlich des Zugverhaltens, beispielsweise auch eine Bewegung zur linken beziehungsweise rechten Seite nicht unmittelbar zu einem Stehenbleiben beziehungsweise zu einer Drehung durch das dann ausgelöste Widerstandssignal führen.

Um den Bewegungsspielraum für den Hund zu ermöglichen, kann ferner vorgesehen sein, dass ein weiteres bandförmiges Element an dem Brustgurt im Wesentlichen in dessen Mitte angeordnet ist, welches an seinem freien Ende das Halteelement zur Kopplung mit einer Hundeleine aufweist. Das Signal für den Hund, welches bei einem Zugverhalten des Hundes in Vorwärtsrichtung an den Hund gesendet werden soll, erfolgt erst, wenn das weitere bandförmige Element vollständig gespannt ist. Dabei kann das bandförmige Element beispielsweise gummiartig ausgebildet sein, oder auch aus einem gleichartigen riemenartigen Material wie der Bauchgurt und der Brustgurt des erfindungsgemäßen Hundegeschirrs bestehen.

Eine weitere Ausgestaltung der Erfindung sieht vor, dass der Brustgurt in seiner Länge zur Anpassung des Hundegeschirrs an die körperlichen Begebenheiten des Hundes veränderbar ist.

Eine Ausgestaltung der Erfindung ist dadurch gekennzeichnet, dass der Brustgurt aus zwei Teilelementen besteht, wobei vorzugsweise zwischen den Teilelementen des Brustgurts ein Mittelelement angeordnet ist, wobei vorteilhafterweise die jeweiligen Enden der Teilelemente mit den Enden des Mittelelementes über Verbindungselemente verbunden sind. Dabei kann das Mittelelement des Brustgurts das Halteelement aufweisen, wobei das Halteelement verschiebbar gegenüber dem Mittelelement des Brustgurts ist. Besteht der Brustgurt aus zwei Teilelementen, können die Teilelemente untereinander mittels des Halteelements verbunden sein. Die zwischen den Teilelementen und dem Mittelelement angeordneten Verbindungselementen können dabei zudem als Anschlagelemente für das Halteelement fungieren, so dass die horizontale Verschiebung des Halteelementes entlang des Mittelelementes des Brustgurts nicht über die Verbindungselemente hinaus möglich ist. Ferner kann die horizontale Verschiebung des Halteelementes dadurch begrenzt werden, dass das Halteelement innerhalb eines doppellagig ausgebildeten Mittelelementes angeordnet ist, wobei die beiden Materiallagen des Mittelelementes miteinander dauerhaft verbunden sind, beispielsweise miteinander vernäht sind. Je nach Positionierung der Verbindung der beiden Lagen kann die horizontale Verschiebbarkeit des Halteelementes entlang des Mittelelementes des Brustgurts definiert werden. Zudem ist das Mittelelement vorteilhafterweise derart ausgebildet, dass eine Zugkraft in die Laufrichtung des Hundes nicht zu einer Verkürzung der Länge des Mittelelementes beziehungsweise des Brustgurts führt. Dies kann erreicht werden, indem das Mittelelement fest mit den Teilelementen des Brustgurts über die Verbindungselemente verbunden ist und gegenüber den Teilelementen nicht verschiebbar ist, beispielsweise durch eine Fixierung sowohl der Teilelemente als auch des Mittelelementes an den jeweiligen Verbindungselementen.

In einer weiteren Ausgestaltung der Erfindung ist der Bauchgurt zur Anpassung an die körperlichen Gegebenheiten eines Hundes in seiner Länge veränderbar.

Eine Ausgestaltung der Erfindung sieht vor, dass wenigstens der Brustgurt und der Bauchgurt des Hundegeschirrs aus einem festen, im Wesentlichen formstabilen Material bestehen. Der Vorteil eines formstabilen Materials gegenüber einem forminstabilen Material, wie beispielsweise Nylon, besteht darin, dass ein formstabiles Material wesentlich besser für den Hund wahrnehmbar ist. Dadurch kann der Hund besser zuordnen, woher das an ihn übermittelten Signal stammt und entsprechend kann eine bessere Konditionierung des Hundes erreicht werden. Eine gewisse Flexibilität des für das erfindungsgemäße Hundegeschirr verwendeten Materials muss jedoch vorhanden sein, um eine optimale Passform des Hundegeschirrs gewährleisten zu können. Die Verwendung eines formstabilen Materials hat den Vorteil, dass sich das Hundegeschirr bei der Anwendung im Wesentlichen nicht verformt, so dass der durch das Hundegeschirr ausgeübte Druck nur an den vorgesehenen Stellen wirkt und nach dem Zugverhalten in die ursprüngliche Form zurückspringt. Insbesondere durch falschen Druck verursachte Verletzungen des Hundes sind derart vermeidbar. Als mögliches Material eignet sich das unter der eingetragenen Marke BioThane vertriebene Material. Dieses Material ist äußerst robust, langlebig und pflegeleicht, und insbesondere leicht abwaschbar, so dass es insbesondere auch hygienische Anforderungen erfüllt. Dabei ist das Material der Marke BioThane antiallergen und aus Kunststoff.

Eine weitere Ausgestaltung der Erfindung ist dadurch gekennzeichnet, dass der Brustgurt mittels wenigstens eines lösbaren Fixierelementes an dem Bauchgurt fixierbar ist. Beispielsweise kann ein derartiges Fixierelement durch eine Klemme realisiert werden, die den Bauchgurt umfasst und über eine Feder oder ein zahnartiges Element einen Kraftschluss zwischen der Klemme und dem zu fixierenden Bauchgurt bewirkt. Die Verklemmung kann reversibel zur Verstellung des Brustgurts entlang des Bauchgurts gelöst werden. Auch eine Anordnung des Fixierelements an dem Bauchgurt, wobei der Brustgurt wenigstens teilweise in das Fixierelement aufgenommen wird, ist möglich.

In einer Ausgestaltung der Erfindung weist der Bauchgurt wenigstens eine Verbindungsschnalle auf, wodurch sich der Bauchgurt zur Anbringung des Hundegeschirrs an einen Hund öffnen und schließen lässt. Dabei befindet sich die Verbindungsschnalle bei einem an dem Hund angebrachten Zustand vorzugsweise im Bereich des Bauches des Hundes. Bei größeren Hunderassen ist auch eine Positionierung der Verbindungsschnalle im seitlichen Bauchbereich möglich. Das Geschirr kann zudem derart an einen Hund angebracht werden, dass die Verbindungsschnalle oben auf dem Rücken des Hundes angeordnet ist. Dabei wird das Hundegeschirr einfach umgedreht. Der Hund steigt dann in das Hundegeschirr hinein, anstatt dass das Hundegeschirr über den Kopf des Hundes gezogen wird, um das Hundegeschirr an dem Hund anzubringen. Das Anordnen des Hundegeschirrs, wobei die Verbindungsschnalle oben am Rücken des Hundes angeordnet ist, hat den Vorteil, dass sich die Verbindungsschnalle leichter öffnen lässt, beispielsweise für den Fall, dass die Verbindungsschnalle durch Schlamm oder dergleichen verdreckt ist.

Eine bevorzugte Ausgestaltung der Erfindung ist dadurch gekennzeichnet, dass der Bauchgurt ein Leinenführungselement aufweist, wobei eine an dem Halteelement angeordnete Leine durch das Leinenführungselement hindurch geführt ist. Vorteilhafterweise ist das Leinenführungselement im Wesentlichen mittig des Rückens des Hundes angeordnet. Derart wird ein Verfangen beziehungsweise Verwickeln der Leine in den Hundebeinen wirksam vermieden. Insbesondere bei der Verwendung einer längeren Leine, beispielsweise einer sogenannten Schleppleine ermöglicht das Leinenführungselement, dass die Schleppleine nicht zwischen den Hundebeinen verläuft.

In einer weiteren Ausgestaltung umfasst das Hundegeschirr wenigstens ein Schutzelement. Das Schutzelement umhüllt dabei vorteilhafterweise diejenigen Bereiche des Bauch- beziehungsweise Brustgurts des Hundegeschirrs, die doppellagig ausgebildet sind und/oder zu Scheuerstellen bei dem Hund führen. Insbesondere doppellagige Gurte können sich bei einer Bewegung des Hundes wenigstens teilweise gegeneinander verschieben oder umschlagen. Druckstellen für den Hund können die Folge sein. Das Schutzelement, welches vorzugsweise aus Neopren besteht, verhindert ein wirksames Scheuern beziehungsweise Hervorrufen von Druckstellen. In einer vorteilhaften Ausgestaltung sind sämtliche Elemente des erfindungsgemäßen Hundegeschirrs mit wenigstens einem Schutzelement umhüllt, so dass das gesamte erfindungsgemäße Hundegeschirr, welches vorteilhafterweise aus einem formstabilen Material besteht, beispielsweise aus dem unter der eingetragenen Marke BioThane vertriebenen Material, ummantelt bzw. umhüllt ist.

Eine weitere Ausgestaltung sieht vor, dass das Hundegeschirr wenigstens ein Leuchtmittel umfasst, beispielsweise um den Hund in der Dunkelheit sichtbar zu kennzeichnen. Zudem kann wenigstens der Brustgurt und/oder der Bauchgurt ein Befestigungselement zur Anbringung von funktionellen Elementen aufweisen, an welchem vorzugsweise zu dekorativen Zwecken ein Dekorationsobjekt, wie etwa eine kleine Tasche, ein Haltegriff oder eine Befestigung für einen Hunderucksack oder dergleichen, anbringbar ist. Das Befestigungselement kann beispielsweise ein Klettelement sein.

In einer weiteren Ausgestaltung der Erfindung ist ein Verbindungselement zwischen dem Bauchgurt und dem Brustgurt des Hundegeschirrs vorgesehen, welches im Wesentlichen zwischen den Vorderbeinen des Hundes verläuft. Das Verbindungsstück bewirkt vorteilhafterweise, dass der Bauchgurt zu dem Brustgurt bzw. der Brustgurt zu dem Bauchgurt in seiner Position zueinander im Wesentlichen fixiert werden, so dass ein Verrutschen des Brustgurts bzw. des Bauchgurts vermindert beziehungsweise verhindert wird. Unterstützt wird dies durch die Verwendung eines formstabilen Materials, beispielsweise das unter der eingetragenen Marke BioThane vertriebene Material, wobei das Verbindungsstück vorteilhafterweise aus diesem Material besteht. Zudem können auch der Brustgurt und der Bauchgurt des erfindungsgemäßen Hundegeschirrs aus diesem Material bestehen, so dass alle Elemente, vorliegend also sowohl Bauchgurt, Brustgurt als auch das Verbindungsstück aus dem formstabilen Material bestehen.

In einer weiteren Ausgestaltung der Erfindung umfasst das erfindungsgemäße Hundegeschirr einen weiteren Bauchgurt, welcher im Bereich des Bauches, vorzugsweise im Bereich der Lende des Hundes, den Bauch des Hundes umschließt, wobei der weitere Bauchgurt mit wenigstens einem Verbindungselement mit dem Bauchgurt verbunden ist. Der Bauchgurt und der weitere Bauchgurt sind voneinander beabstandet. In einer vorteilhaften Ausgestaltung ist der weitere Bauchgurt über zwei Verbindungselemente, die vorzugsweise im Wesentlichen gurtförmig ausgebildet sind, mit dem Bauchgurt verbunden, wobei eines der Verbindungselemente auf dem Rücken des Hundes und das andere Verbindungselement auf dem Bauch des Hundes angeordnet ist. Die Verwendung eines weiteren Bauchgurts hat den Vorteil, dass dieser durch die Anordnung im Lendenbereich des Hundes ein Verrutschen des Bauchgurt in Richtung der Vorderbeine des Hundes verhindert. Dies wird vor allen Dingen dadurch erreicht, dass der Umfang des Bauches des Hundes im Lendenbereich kleiner ist, als der Umfang des Bauches von dem Hund im Bereich des Rumpfes, so dass der weitere Bauchgurt durch die Anordnung im Lendenbereich nicht in Richtung der Vorderbeine des Hundes verrutschen kann, da der Umfang des Bauches in Richtung der Vorderbeine ausgehend vom Lendenbereich zunimmt.

Weitere Einzelheiten, Merkmale und Vorteile der Erfindung werden nachfolgend anhand des in den Figuren dargestellten Ausführungsbeispiels näher erläutert.

Dabei zeigt
- Fig. 1: eine schematische Darstellung einer Ausgestaltung eines erfindungsgemäßen Hundegeschirrs;
- Fig. 2: eine schematische Darstellung einer weiteren Ausgestaltung eines erfindungsgemäßen Hundegeschirrs für größere Hunde;
- Fig. 3: eine schematische Darstellung einer Ausgestaltung eines erfindungsgemäßen Hundegeschirrs für kleine Hunde;
- Fig. 4: eine schematische Darstellung einer weiteren Ausgestaltung eines erfindungsgemäßen Hundegeschirrs für kleinere Hunde; und
- Fig. 5: eine schematische Darstellung einer Ausgestaltung eines erfindungsgemäßen Hundegeschirrs im angeordneten Zustand an einem Hund.

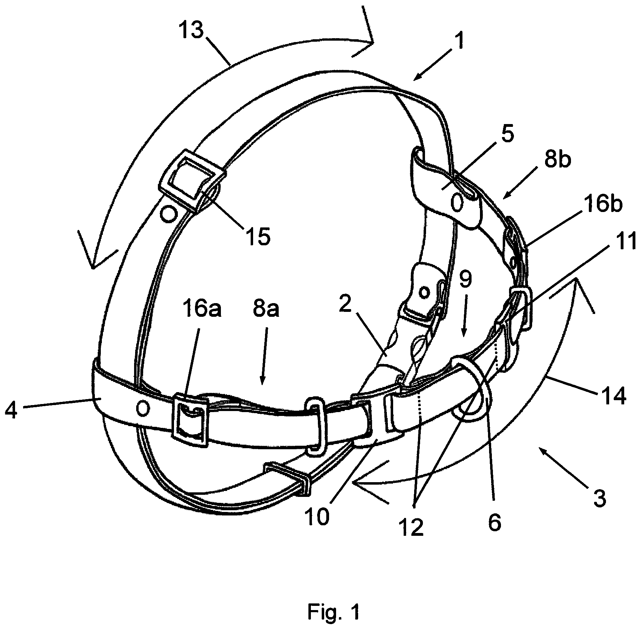

In Fig. 1 ist eine Ausgestaltung eines erfindungsgemäßen Hundegeschirrs schematisch dargestellt. Das Hundegeschirr umfasst einen Bauchgurt 1, welcher Bauch und Widerrist eines Hundes im Bereich des Rumpfes umschließt. Ferner umfasst das Hundegeschirr einen Brustgurt 3, welcher über der Brust des Hundes auf der Höhe der Schulterblätter und unterhalb des Kehlkopfes des Hundes angeordnet ist, wobei der Brustgurt 3 ein Halteelement 6 zur Befestigung einer Leine aufweist. Die Enden des Brustgurts 3 sind über als Schlaufen ausgebildete Verbindungselemente 4 und 5 derart mit dem Bauchgurt 1 verbunden, dass der Brustgurt 3 entlang des Bauchgurts 1 fixiert verstellbar ist.

Es ist zu erkennen, dass im Verbindungsbereich zwischen Bauchgurt 1 und Brustgurt 3 ein Winkel von etwa 90° zwischen diesen Gurten ausgebildet ist. Die Verbindungselemente 4 und 5 als Schlaufen umschließen dabei formschlüssig den Bauchgurt 1. Die Schlaufen sind mittels einer Buchschraube geschlossen, so dass im Ergebnis ein Reibschluss zwischen dem Brustgurt 3 und dem Bauchgurt 1 entsteht. Die fixierte Verstellung des erfindungsgemäßen Hundegeschirrs wird über einen Reibschluss gewährleistet, wobei bei Überwindung der entgegenwirkenden Reibkraft durch den Reibschluss eine Verschiebung der Enden des Brustgurts entlang des Bauchgurts möglich ist.

Wie über den Doppelpfeil mit dem Bezugszeichen 13 angedeutet, ist der Bauchgurt 1 in seiner Länge veränderbar, insbesondere um das Hundegeschirr an die körperlichen Ausmaße des Hundes individuell anpassen zu können. Hierzu weist der Bauchgurt 1 ein Längenverstellungselement 15 auf, welches vorliegend entlang der Bauchgurt 1 verschiebbar ist, um den Bauchgurt 1 in der Länge verstellen zu können und vorliegend als Schiebeschnalle beziehungsweise Schieber ausgebildet ist. Der Bauchgurt 1 weist ferner eine Verbindungsschnalle 2 auf, wodurch sich der Bauchgurt 1 öffnen und schließen lässt, um das Hundegeschirr an einen Hund anlegen zu können. Die Verbindungsschnalle 2 besteht aus Metall, vorliegend aus Aliminium, kann jedoch zur Verringerung des Gewichts des Hundegeschirrs auch aus Kunststoff bestehen.

Der Brustgurt 3 des erfindungsgemäßen Hundegeschirrs besteht aus drei Teilen: zwei Teilelemente 8a, 8b und ein Mittelelement 9. Das Mittelelement 9 ist zwischen den zwei Teilelementen 8a, 8b angeordnet und mit diesen jeweils über ein Verbindungselement 10, 11 verbunden. Dabei ist das gurtförmige Mittelelement 9 durch eine jeweils von den Verbindungselementen 10, 11 ausgebildete Lasche hindurch gezogen und hinter den Verbindungselementen 10, 11 vernäht. Die beidseitigen Vernähungen 12 bewirken, dass trotz der hier vorliegenden schleifenartigen Ausgestaltung des Mittelelementes 9 sich dieses bei einem Zug an dem Haltelement 6 nicht verschiebt, sondern sich das Haltelement 6 entlang des Mittelelements 9 verschiebt. Das Mittelelement 9 ist folglich gegenüber den jeweiligen Verbindungselementen 10, 11 in seiner Position fixiert. Dies führt dazu, dass bei einer auf das Halteelement 6 wirkenden Kraft die Länge des Brustgurts 3 nicht verändert beziehungsweise der Brustgurt 3 nicht verkürzt wird.

Sowohl das Teilelement 8a als auch das Teilelement 8b weisen eine Längenverstellung auf, so dass der Brustgurt 3 an die körperlichen Gegebenheiten des Hundes anpassbar ist. Dies wird durch Längenverstellungselemente 16a und 16b ermöglicht, die jeweils an den Teilelementen 8a und 8b des Brustgurts 3 angeordnet sind. Vorliegend sind die Längenverstellungselemente 16a und 16b jeweils als Schiebeschnalle ausgebildet. Die Möglichkeit der Längenverstellung ist über den dargestellten Doppelpfeil mit dem Bezugszeichen 14 angedeutet.

In der vorliegenden Ausgestaltung weist das Mittelelement 9 des Brustgurts 3 das Halteelement 6 zur Befestigung einer Leine auf. Dabei ist das Halteelement 6 zu einem gewissen Grad gegenüber dem Mittelelement 9 im Wesentlichen horizontal verschiebbar. Begrenzt wird die horizontale Verschiebung jeweils durch die unmittelbar neben den Verbindungselementen 10, 11 angeordnete Vernähungen 12, so dass bei einem Anschlag des Halteelementes 6 und einem Zugverhalten des Hundes in Vorwärtsrichtung eine Drehung des Hundes ausgelöst wird.

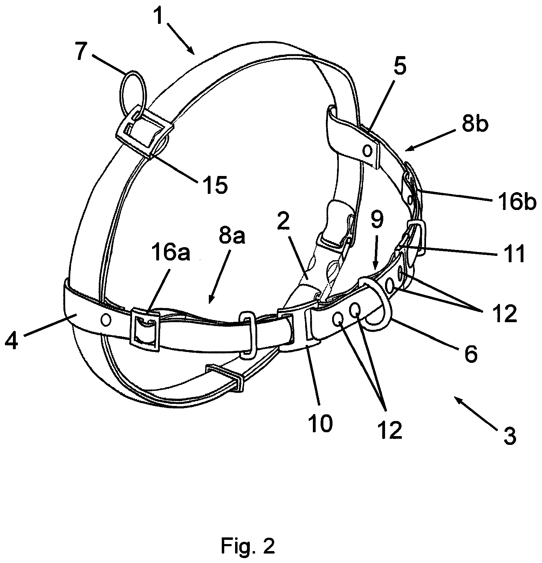

Fig. 2 zeigt eine schematische Darstellung einer weiteren Ausgestaltung eines erfindungsgemäßen Hundegeschirrs. Das erfindungsgemäße Hundegeschirr gemäß dieser Ausgestaltung eignet sich vorteilhafterweise zur Verwendung bei größeren bis großen Hunden. Im Gegensatz zu der Ausgestaltung nach Fig. 1 ist das Mittelelement 9 des Brustgurts 3 an den Verbindungselementen 10 und 11 über Verschraubungen 12 fixiert. Vorliegend fixieren jeweils zwei Buchschrauben das Mittelelement 9 des Brustgurts 3 an den Verbindungselementen 10 und 11.

Zudem ist im Rückenbereich des Hundes an dem Bauchgurt 1 des Hundegeschirrs ein Leinenführungselement 7 angeordnet, wobei das Leinenführungselement 7 vorliegend an dem Längenverstellungselement 15 des Bauchgurts 1 angeordnet ist. Eine an dem Halteelement 6 angeordnete Leine ist durch das Leinenführungselement 7 hindurch führbar. Derart wird ein Verfangen beziehungsweise Verwickeln der Leine in den Hundebeinen, insbesondere bei langen Leinen wirksam vermieden.

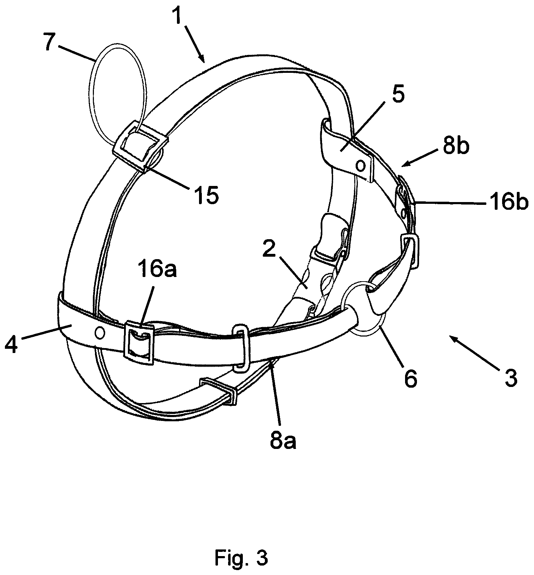

In Fig. 3 ist eine schematische Darstellung einer Ausgestaltung eines erfindungsgemäßen Hundegeschirrs für kleine bis kleinere Hunde gezeigt. Die Ausgestaltung für kleine bis kleinere Hunde unterscheidet sich von der Ausgestaltung für größere bis große Hunde im Wesentlichen dadurch, dass der Brustgurt 3 lediglich zwei Teilelemente 8a und 8b aufweist, nicht jedoch das bei den Ausgestaltungen der erfindungsgemäßen Hundegeschirre gemäß Fig. 1 und Fig. 2 zwischen den Teilelementen 8a und 8b angeordnete Mittelelement 9.

Das Halteelement 6 zur Befestigung einer nicht dargestellten Leine ist vorliegend derart angeordnet, dass das Halteelement 6 gleichzeitig als eine Art Verbindungselement für die beiden Teilelemente 8a und 8b des Brustgurts 3 dient. Wie zu erkennen ist, ist jeweils das dem Haltelement 6 zugewandte Ende des Teilelements 8a bzw. 8b des Brustgurts 3 schlaufenartig durch das Halteelement 6 hindurch geführt, so dass die beiden Teilelemente 8a und 8b des Brustgurts 3 mittels des Halteelements 6 miteinander verbunden sind.

Der Brustgurt 3 besteht vorliegend somit aus zwei Teilelementen 8a und 8b, welche über das Halteelement 6 miteinander verbunden sind. Die dem Bauchgurt 1 zugewandten Enden der Teilelemente 8a und 8b des Brustgurts 3 sind mit dem Bauchgurt 1 derart verbunden, dass der Brustgurt 3 entlang des Bauchgurts 1 fixiert verstellbar ist.

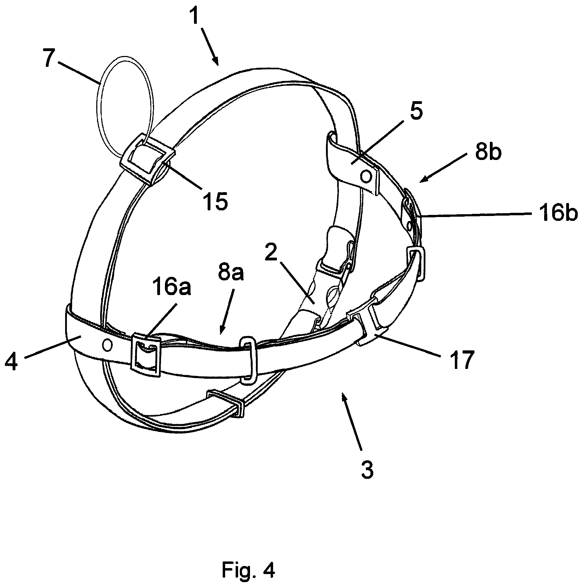

Fig. 4 zeigt eine weitere Ausgestaltung eines erfindungsgemäßen Hundegeschirrs für kleine bis kleinere Hunde in einer schematischen Darstellung. Im Unterschied zu der Ausgestaltung des erfindungsmäßen Hundegeschirrs nach Fig. 3 ist das Element 17, welches die beiden Teilelemente 8a und 8b des Brustgurts 3 verbindet, als Schiebeschnalle ausgebildet. An dem Element 17 ist ein Halteelement 6 anordbar, an welchem eine nicht dargestellte Leine befestigbar ist.

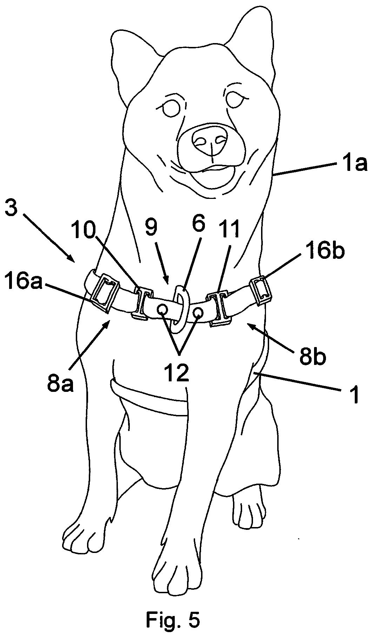

Fig. 5 zeigt eine Ausgestaltung eines erfindungsgemäßen Hundegeschirrs im angeordneten Zustand an einem Hund 1a. Ein Bauchgurt 1 umschließt Bauch und Widerrist des Hundes 1a im Bereich des Rumpfes. Mit dem Bauchgurt 1 ist ein Brustgurt 3 derart dem Bauchgurt 1 verbunden, dass der Brustgurt 3 entlang des Bauchgurt 1 fixiert verstellbar ist. Der Brustgurt 3 weist ein Halteelement 6 zur Befestigung einer Leine auf, wobei das Halteelement im Wesentlichen mittig des Brustgurts 3 und somit zwischen den Vorderbeinen des Hundes 1a angeordnet ist. Das Halteelement 6 befindet sich an dem Mittelelement 9 des dreiteiligen Brustgurts 3, wobei das Mittelelement 9 des Brustgurts 3 über zwei Verbindungselement 10 und 11 jeweils mit einem der Teilelemente 8a bzw. 8b des Brustgurts 3 verbunden ist. Es ist zu erkennen, dass die Teilelemente 8a bzw. 8b jeweils in ihrer Länge verstellbar sind, wobei die Längenverstellung der Teilelemente 8a bzw. 8b des Brustgurts 3 jeweils über Längenverstellungselemente 16a und 16b ermöglicht wird, die vorliegend jeweils als Schiebeschnalle ausgebildet sind. Anhand der Darstellung der Ausgestaltung des erfindungsgemäßen Hundegeschirrs im angebrachten Zustand an einem Hund 1a ist zu erkennen, dass der Brustgurt 3 des erfindungsgemäßen Hundegeschirrs über der Brust des Hundes 1a angeordnet ist, vorliegend in etwa auf der Höhe der Schulterblätter des Hundes 1a und unterhalb des Kehlkopfes des Hundes 1a.

In einer vorteilhaften Ausgestaltung der Erfindung ist an dem Halteelement 6 des Brustgurts ein weiteres Kopplungselement angeordnet, an welchem dann eine Leine befestigbar ist. Der Vorteil ist, dass das Befestigungselement der Leine derart beabstandet von dem Brustgurt ist, dass beispielsweise das Befestigungselement der Leine leichter an dem erfindungsgemäßen Hundegeschirr anbringbar ist. Ferner kann insbesondere ein Einklemmen des Befestigungselements der Leine im Fell des Hundes vermieden werden. Auch Leinenführer, die beispielsweise durch körperliche Beeinträchtigungen, wie beispielsweise Arthrose, erfahren eine Erleichterung durch die Möglichkeit, das Befestigungselement der Hundeleine an dem beabstandeten Kopplungselement befestigen zu können.

Die in den Fig. dargestellten und beschriebenen Ausführungsbeispiele dienen lediglich der Erläuterung der Erfindung und sind für diese nicht beschränkend.

Im Folgenden sind weitere Aspekte der Erfindung aufgeführt:
Die Erfindung betrifft ein Hundegeschirr bestehend aus zwei Gurten, die im 90° Winkel miteinander verbunden sind. Der Bauchgurt umschließt den Bauch und den Rücken des Hundes hinter seinen Schultern, der Brustgurt umfasst den vorderen Halsbereich, sowie den oberen Schulterbereich des Hundes. Der Brustgurt besteht aus mindestens zwei Elementen und ist höhenverstellbar entlang des Bauchgurts. Beide Gurte sind größenverstellbar. Das Verbindungsstück zur Anbringung einer Hundeleine befindet sich im vorderen Bereich des Brustgurts.

Hundegeschirre gibt es in vielen verschiedenen Formen. Sie sind eine Alternative zum klassischen Hundehalsband und werden bei Benutzung durch ein Verbindungsstück mit einer Hundeleine verbunden. Ein Zweck von Hundegeschirren ist die Leinenführigkeit des - das Hundegeschirr tragenden - Hundes zu verbessern beziehungsweise zu trainieren. Üblicherweise befindet sich das Hundeleinenverbindungselement am Rücken des Hundegeschirrs. In diesen Fällen ist auch die Konstruktion des Hundegeschirrs in Hinblick darauf entwickelt worden, dass es zu einer Druckverlagerung auf bestimmte Muskelpartien des Hundes bei einer Straffung der Hundeleine-Hundegeschirr Konstruktion kommt. Diese auf dem Markt gehandelten Hundegeschirre vermögen nicht den Drang des Hundes in Vorwärtsrichtung zu ziehen, zu verhindern. Vielmehr führen diese Konstruktionen dazu, dass das Zug-Verhalten des Hundes in die Vorwärtsrichtung verstärkt wird. Dies begründet sich darauf, dass, wenn ein Hund einen Zug verspürt, sich dieser durch seinen natürlich ausgeprägten Zug-Reflex in die entgegensetzte Richtung bewegt. Das Ziehen an der Hundeleine wird damit verstärkt. Weiterhin übt diese Konstruktion bei Zug durch die Hundeleine oder zu hoher Positionierung des Geschirrs am Torso, Druck auf die Wirbelsäule des Hundes und andere sensitive Körperbereiche aus. Dies kann langfristig zu gesundheitlichen Beschwerden führen. Starkes und ruckartiges Zugverhalten des Hundes in Vorwärtsrichtung kann zudem zum Sturz des Leinenführers und bei beiden Parteien zu Verletzungen führen. Alternativen sind das Trixie Top Trainer Ausbildungsgeschirr und der HALTI Kopfhalfter. Diese Hundegeschirre zeichnen sich dadurch aus, dass die Schnauze des Hundes von einem Gurt umfasst ist. Bei Vorwärts-Zug wird der Kopf des Hundes nach unten gedrückt. Diese Hundegeschirre arbeiten wie die meisten Alternativen, die das Ziehen des Hundes in die Vorwärtsrichtung verhindern sollen, mit unnatürlichen Sanktionen wie der Abschnürung der Luftzufuhr, dem Zufügen von Schmerzen (Stachelhalsband) oder einer unnatürlichen Kopfdrehung. Das Dr. Mugford HALTI Geschirr und das Leinenführigkeitsgeschirr Harness Leash Training (DE 20 2010 014 102) arbeiten mit einer Haltevorrichtung vorne und am Rücken des Hundes und verhindern eine Reduzierung des Zugdrangs durch die Versendung missverständlicher Signale bei Zug. Durch den Zug am Rücken des Hundes wird der Oppositions-Reflex ausgelöst, durch den Zug am Hals des Hundes wird das Tier in Richtung des Halters gezogen. Dr. Mugford HALTI Geschirr, das Leinenführigkeitsgeschirr Harness Leash Training sowie das im US Patent US 2004/0000273 beschriebene Geschirr zeichnen sich durch eine fixe Positionierung des Verbindungsstücks im Halsbereich des Hundes aus. Bei Zug des Hundes in die linke oder rechte Richtung beult das Verbindungsstück in entsprechende Zugrichtung aus und verhindert so, dass die durch den Zug entstandene Kraft sich auf den vollständigen Halsbereich ausdehnt. Steht der Leinenführer links vom Hund wird nur Zug auf die rechte Körperseite des Hundes ausgeübt. Das im US Patent US 2004/0000273 beschriebene Hundegeschirr ermöglicht keine individuelle Anpassung des Geschirrs im 90° Winkel, das Dr. Mugford HALTI Geschirr ermöglicht eine Anpassung in einem etwa zehn Zentimeter breiten Bereich. Das Leinenführigkeitsgeschirr Harness Leash Training besitzt wie die vergleichbaren Norwegergeschirre keine Möglichkeit der Größenanpassung des Brustgurtes und riskiert damit eine zu enge oder weite Anbringung des Hundegeschirrs. Das US Patent US 2006/0102102 erfüllt die Anforderungen an ein Hundegeschirr, wie in diesem Gebrauchsmuster beschrieben, verfügt jedoch ebenso wenig wie das Leinenführigkeitsgeschirr Harness Leash Training über die Möglichkeit der individuellen Anpassung des Brustgurtes im 90° Winkel und riskiert damit eine zu hohe oder niedrige Platzierung des Brustgurts. Daraus können sich körperliche Beeinträchtigungen für den Hund ergeben, sowie die Funktionalität zur Reduzierung des Zugdrangs des Hundes behindert werden. Eine zu niedrige Positionierung des Brustgurtes kann zum Verheddern der Hundeleine zwischen den Hundebeinen führen und damit zum Sturz des Hundes und des Hundeführers. Bisherige Hundegeschirre zeichnen sich durch Funktionen zur Erhöhung der Bequemlichkeit, Haltbarkeit, Verminderung der Gewichtsbelastung, Verminderung von Scheuereffekten und der Größenanpassung aus. Das hier beschriebene Hundegeschirr ermöglicht die Kontrolle über das Zugverhalten des Hundes ohne das Zuführen von negativer körperlicher Bestrafung und lässt sich den körperlichen Gegebenheiten des Hundes individuell anpassen. Es erfüllt seine Funktion durch Erreichung einer natürlichen Reiz-Reaktion Erfahrung, welche durch eine optimale Zugkraftverteilung auf den Hundekörper ausgelöst wird.

Bisherige Hundegeschirre, welche die Zugkraft des Hundes in die Vorwärtsrichtung verhindern sollen, gliedern sich in zwei Gruppen: Die eine Gruppe von Hundegeschirren arbeitet mit Bestrafungsmechanismen, wie das Abschnüren der Luftzufuhr oder der Zufügung von Schmerz. Die andere Gruppe arbeitet mit der Veränderung der Bewegungsrichtung bei Zug durch den Hund. Jedoch enthält kein Hundegeschirr dieser Gruppe alle erforderlichen Merkmale, um die optimale Anpassbarkeit des Geschirrs zu gewährleisten und die optimale Verteilung der Zugkraft auf den Halsbereich des Hundes sicherzustellen und damit bei Zug ausschließlich das gewünschte Signal (Hund dreht sich in Richtung des Halters) ohne Gesundheitsrisiken für Hund und Halter auszusenden. Das hier beschriebene Hundegeschirr hingegen enthält alle Merkmale der tiergerechten Anbringung ohne das Risiko einer chronischen negativen körperlichen Beeinträchtigung des Hundes in Kauf zu nehmen. Die gesundheitlich unbedenkliche Konstruktion unterbindet das Ziehen des Hundes, indem sie dem Hund die Belohnung (vorwärts zu kommen) durch Zug auf den vorderen Halsbereich vorenthält (Hunde wird bei zu starker Zug in Richtung des Hundeführers gezogen). Die Reiz-Reaktion Kette führt zur Aufgabe des Zugimpulses des Hundes.

Der Erfindung liegt die Aufgabe zugrunde, ein Hundegeschirr zu schaffen, welches das natürliche Bedürfnis des Hundes nach vorne zu ziehen, ohne körperliche Bestrafung verhindert und die optimale Anpassung an den Körpers des Hundes ermöglicht, um Gesundheitsrisiken für Mensch und Hund, sowie die Versendung eines missverständlichen Signals auszuschließen.

Erfindungsgemäß wird die beschriebene Aufgabe dadurch gelöst, dass die beiden Gurte in einem 90° Winkel miteinander verknüpft werden, die Haltevorrichtung für die Hundeleine am Brustgurt im Halsbereich des Hundes zu finden ist und horizontal einen Bewegungsraum für das Leinen-Verbindungselement besitzt. Beide Gurte sind größenverstellbar und können jeweils Verbindungstücke enthalten. Der Brustgurt ist durch starken Druck verschiebbar, um eine Anlage im 90° Winkel zum Bauchgurt zu ermöglichen. Ferner können Elemente des Hundegeschirrs Leuchtmittel sowie Klettelemente enthalten.

Ein Ausführungsbeispiel der Erfindung ist in der Zeichnung dargestellt und wird nachfolgend näher beschrieben. Die einzige Figur zeigt schematisch die Führung, die Positionierung des Leinen-Anschlusselements und den Anschluss der beiden Elemente (Bauchgurt und Brustgurt).

Der Bauchgurt (bestehend aus einem oder mehreren Verbindungselementen) (1) wird durch eine Verbindungsschnalle (2) geschlossen. Der Brustgurt (bestehend aus mindestens zwei Elementen) (3) wird seitlich hinter den Vorderläufen jeweils rechts und links mit dem Bauchgurt durch zwei Verbindungselemente in Verbindung gebracht (4, 5). Der Bauchgurt und der Brustgurt sind jeweils größenverstellbar. Das Leinen-Verbindungselement (6) befindet sich im vorderen Brustbereich am Hals des Hundes und hat einen horizontalen Bewegungsraum im Hals-Bereich des Hundes.

Die Erfindung umfasst ferner die im Nachfolgenden angeführten Aspekte:
Aspekt 1 Hundegeschirr mit einem den Bauch und Rücken des Hundes umschließenden Bauchgurt (1), welcher sich an mindestens einer Stelle durch eine Verbindungsschnalle (2) öffnen und schließen lässt, dadurch gekennzeichnet, dass der Brustgurt (3) zwei Verbindungselemente (4, 5) enthält, durch welche der Brustgurt (3) im 90° Winkel zum Bauchgurt (1) positioniert werden kann.
Aspekt 2 Hundegeschirr nach Aspekt 1, dadurch gekennzeichnet, dass der Brustgurt (3) aus mindestens zwei Elementen besteht und diesen mindestens ein Element verstellbar ist.
Aspekt 3 Hundegeschirr nach einem der vorstehenden Aspekte, dadurch gekennzeichnet, dass im Halsbereich des Hundes ein Leinen-Verbindungselement (6) besitzt und dieses horizontal verschoben werden kann.

### Bezugszeichenliste

- 1: Bauchgurt
- 1a: Hund
- 2: Verbindungsschnalle
- 3: Brustgurt
- 4: Verbindungselement 1 Brustgurt
- 5: Verbindungselement 2 Brustgurt
- 6: Halteelement
- 7: Leinenführungselement
- 8a: Teilelement 1
- 8b: Teilelement 2
- 9: Mittelelement
- 10: Verbindungselement 1 Teilelement
- 11: Verbindungselement 2 Teilelement
- 12: Vernähung/Verschraubung
- 13: Längenverstellung Bauchgurt
- 14: Längenverstellung Brustgurt
- 15: Längenverstellungselement Bauchgurt
- 16a: Längenverstellungselement 1 Brustgurt
- 16b: Längenverstellungselement 2 Brustgurt

## Patentansprüche

1. Hundegeschirr, umfassend:
einen Bauchgurt (1), welcher Bauch und Widerrist eines Hundes im Bereich des Rumpfes umschließt, und
einen Brustgurt (3), welcher über der Brust des Hundes, vorzugsweise auf der Höhe der Schulterblätter des Hundes und unterhalb des Kehlkopfes des Hundes, angeordnet ist, wobei der Brustgurt (3) ein Halteelement (6) zur Befestigung einer Leine aufweist,
wobei
die Enden des Brustgurts (3) derart mit dem Bauchgurt (1) verbunden sind, dass der Brustgurt (3) entlang des Bauchgurts (1) über einen Reibschluss fixiert verstellbar ist, wobei der Reibschluss über eine an den Enden des Brustgurts ausgebildete Schlinge realisiert wird, welche den Bauchgurt unmittelbar, das heißt passgenau, umgreift, und bei Überwindung einer entgegenwirkenden Reibkraft durch den Reibschluss eine Verschiebung der Enden des Brustgurts (3) entlang des Bauchgurts (1) ermöglicht wird.

2. Hundegeschirr nach Anspruch 1, **dadurch gekennzeichnet, dass** der Brustgurt (3) im Wesentlichen in einem Winkel von etwa 90° zum Bauchgurt (1) angeordnet ist.

3. Hundegeschirr nach Anspruch 1 oder Anspruch 2, **dadurch gekennzeichnet, dass** das Halteelement (6) entlang des Brustgurts (3), vorzugsweise im Wesentlichen in horizontaler Richtung, verschiebbar ist.

4. Hundegeschirr nach Anspruch 3, **dadurch gekennzeichnet, dass** der Brustgurt (3) ein Anschlagelement (10, 11) aufweist, so dass das Halteelement (6) nicht über das Anschlagelement hinaus verschiebbar ist.

5. Hundegeschirr nach einem der Ansprüche 1 bis 4, **dadurch gekennzeichnet, dass** der Brustgurt (3) in seiner Länge veränderbar ist.

6. Hundegeschirr nach einem der Ansprüche 1 bis 5, **dadurch gekennzeichnet, dass** der Brustgurt (3) aus zwei Teilelementen (8a, 8b) besteht, wobei vorzugsweise zwischen den Teilelementen (8a, 8b) des Brustgurts (3) ein Mittelelement (9) angeordnet ist, wobei die jeweiligen Enden der Teilelemente (8a, 8b) mit den Enden des Mittelelementes (9) über Verbindungselemente (10, 11) verbunden sind.

7. Hundegeschirr nach Anspruch 6, **dadurch gekennzeichnet, dass** Mittelelement (9) des Brustgurts das Halteelement (6) zur Befestigung einer Leine aufweist, wobei das Halteelement (6) verschiebbar gegenüber dem Mittelelement (9) des Brustgurts (3) ist.

8. Hundegeschirr nach einem der Ansprüche 1 bis 7, **dadurch gekennzeichnet, dass** der Bauchgurt (1) in seiner Länge veränderbar ist.

9. Hundegeschirr nach einem der Ansprüche 1 bis 8, **dadurch gekennzeichnet, dass** wenigstens der Brustgurt (3) und/oder der Bauchgurt (1) des Hundegeschirrs aus einem festen, im Wesentlichen formstabilen Material bestehen.

10. Hundegeschirr nach einem der Ansprüche 1 bis 9, **dadurch gekennzeichnet, dass** der Brustgurt (3) mittels wenigstens eines lösbaren Fixierelementes (4, 5) an dem Bauchgurt fixierbar ist.

11. Hundegeschirr nach einem der Ansprüche 1 bis 10, **dadurch gekennzeichnet, dass** der Bauchgurt (1) eine Verbindungsschnalle (2) aufweist, wodurch sich der Bauchgurt (1) öffnen und schließen lässt.

12. Hundegeschirr nach einem der Ansprüche 1 bis 11, **dadurch gekennzeichnet, dass** der Bauchgurt (1) ein Leinenführungselement (7) aufweist, wobei eine an dem Halteelement (6) angeordnete Leine durch das Leinenführungselement (7) hindurch geführt ist.

13. Hundegeschirr nach einem der Ansprüche 1 bis 12, **dadurch gekennzeichnet, dass** das Hundegeschirr ein Schutzelement umfasst.

14. Hundegeschirr nach einem der Ansprüche 1 bis 13, **dadurch gekennzeichnet, dass** das Hundegeschirr ein Leuchtmittel umfasst.

15. Hundegeschirr nach einem der Ansprüche 1 bis 14, **dadurch gekennzeichnet, dass** wenigstens der Brustgurt (3) und/oder der Bauchgurt (1) ein Befestigungselement zur Anbringung von funktionellen Elementen aufweist, an welchem vorzugsweise zu dekorativen Zwecken ein Dekorationsobjekt anbringbar ist.

## Claims

1. Dog harness comprising:
a belly belt (1) which surrounds the belly and withers of a dog in the region of the trunk, and
a chest strap (3) which is arranged above the dog's chest, preferably at the level of the dog's shoulder blades and below the dog's larynx, the chest strap (3) having a holding element (6) for fastening a leash,
whereby
the ends of the chest strap (3) are connected to the belly belt (1) in such a way that the chest strap (3) can be adjusted along the chest strap (1) in a fixed manner by a frictional connection, whereby the frictional connection is realized by a loop formed at the ends of the chest strap, which loop engages directly, viz. with an exact fit, around the belly bell and allows a displacement of the ends of the chest strap (3) along the belly belt (1) when a counteracting frictional force overcomes the frictional connection.

2. A dog harness according to claim 1, **characterised in that** the chest strap (3) is arranged substantially at an angle of about 90° to the belly belt (1).

3. A dog harness according to claim 1 or claim 2, **characterized in that** the holding element (6) is displaceable along the chest strap (3), preferably substantially in horizontal direction.

4. A dog harness according to claim 3, **characterized in that** the chest strap (3) has a stop element (10, 11) so that the holding element (6) is not displaceable beyond the stop element.

5. A dog harness according to any one of claims 1 to 4, **characterised in that** the chest strap (3) is variable in length.

6. A dog harness according to any one of claims 1 to 5, **characterised in that** the chest strap (3) consists of two partial elements (8a, 8b), wherein a central element (9) is preferably arranged between the partial elements (8a, 8b) of the chest strap (3), wherein the respective ends of the partial elements (8a, 8b) are connected to the ends of the central element (9) via connecting elements (10, 11).

7. A dog harness according to claim 6, **characterized in that** the central element (9) of the chest strap comprises the holding element (6) for fastening a leash, wherein the holding element (6) is displaceable relative to the central element (9) of the chest strap (3).

8. A dog harness according to any one of claims 1 to 7, **characterised in that** the belly belt (1) is variable in length.

9. A dog harness according to any one of claims 1 to 8, **characterized in that** at least the chest strap (3) and/or the belly belt (1) of the dog harness are made of a solid, substantially dimensionally stable material.

10. A dog harness according to any one of claims 1 to 9, **characterized in that** the chest strap (3) can be fixed to the belly belt by at least one releasable fixing element (4, 5).

11. A dog harness according to any one of the claims 1 to 10, **characterized in that** the belly belt (1) has a connecting buckle (2), whereby the belly belt (1) can be opened and closed.

12. A dog harness according to any one of claims 1 to 11, **characterized in that** the belly belt (1) has a leash guiding element (7), whereby a leash arranged on the holding element (6) is guided through the leash guiding element (7).

13. A dog harness according to any one of claims 5 to 12, **characterised in that** the dog harness comprises a protective element.

14. A dog harness according to any one of claims 1 to 13, **characterized in that** the dog harness comprises an illuminant.

15. A dog harness according to any one of claims 1 to 14, **characterized in that** at least the chest strap (3) and/or the belly belt (1) has a fastening element for attaching functional elements, to which a decorative object can be attached, preferably for decorative purposes.

## Revendications

1. Harnais de chien, comprenant:
un sangle abdominale (1), qui entoure le ventre et le garrot d'un chien dans la zone du torse, et
un sangle de poitrine (3), qui est disposé sur la poitrine du chien, de préférence au niveau des omoplates du chien et au-dessous du larynx du chien, le sangle de poitrine (3) comprenant un élément de retenue (6) pour fixer une laissé,
dans lequel
les extrémités du sangle de poitrine (3) sont reliées au sangle abdominale (1), de sorte que le sangle de poitrine (3) peut être réglé le long du sangle abdominale de manière fixée par friction, la liaison à friction étant réalisée par une fronde formée aux extrémités du sangle de poitrine, laquelle fronde entoure directement, c.-à.-d. sur mesure, le sangle abdominale, et dans lequel un déplacement des extrémités du sangle de poitrine (3) le long du sangle abdominale (1) est rendu possible par la liaison à friction en surmontant une force de friction opposée.

2. Harnais de chien selon la revendication 1, **caractérisé en ce que** le sangle de poitrine (3) est essentiellement disposé sous un angle d'environ 90° par rapport au sangle abdominale (1).

3. Harnais de chien selon la revendication 1 ou la revendication 2, **caractérisé en ce que** l'élément de retenue (6) est déplaçable le long du sangle de poitrine (3), de préférence essentiellement dans la direction horizontale.

4. Harnais de chien selon la revendication 3, **caractérisé en ce que** le sangle de poitrine (3) comprend un élément de butée (10, 11), de sorte que l'élément de retenue (6) ne peut pas être déplacé au-delà de l'élément de butée.

5. Harnais de chien selon l'une des revendications 1 à 4, **caractérisé en ce que** la longueur du sangle de poitrine (3) est modifiable.

6. Harnais de chien selon l'une des revendications 1 à 5, **caractérisé en ce que** le sangle de poitrine (3) est composé de deux éléments partiels (8a, 8b), dans lequel un élément intermédiaire (9) est de préférence disposé entre les éléments partiels (8a, 8b) du sangle de poitrine (3), les extrémités respectives des éléments partiels (8a, 8b) étant reliées aux extrémités de l'élément intermédiaire (9) via des éléments de liaison (10, 11).

7. Harnais de chien selon la revendication 6, **caractérisé en ce que** l'élément intermédiaire (9) du sangle de poitrine comprend l'élément de retenue (6) pour fixer une laisse, l'élément de retenue (6) étant déplaçable par rapport à l'élément intermédiaire (9) du sangle de poitrine (3).

8. Harnais de chien selon l'une des revendications 1 à 7, **caractérisé en ce que** la longueur du sangle abdominale (1) est modifiable.

9. Harnais de chien selon l'une des revendications 1 à 8, **caractérisé en ce qu'**au moins le sangle de poitrine (3) et/ou le sangle abdominale (1) du harnais de chien sont formés d'un matériau solide, qui a essentiellement une forme stable.

10. Harnais de chien selon l'une des revendications 1 à 9, **caractérisé en ce que** le sangle de poitrine (3) peut être fixé au sangle abdominale (1) par moyen d'au moins un élément de fixation (4, 5) amovible.

11. Harnais de chien selon l'une des revendications 1 à 10, **caractérisé en ce que** le sangle abdominale (1) comprend une boucle de liaison (2), par moyen de laquelle le sangle abdominale (1) peut être ouvert et fermé.

12. Harnais de chien selon l'une des revendications 1 à 11, **caractérisé en ce que** le sangle abdominale (1) comprend un élément de guidage de laisse (7), une laisse disposée sur l'élément de retenue (6) étant passée à travers l'élément de guidage de laisse (7).

13. Harnais de chien selon l'une des revendications 5 à 12 **caractérisé en ce que** le harnais de chien comprend un élément de protection.

14. Harnais de chien selon l'une des revendications 1 à 13, **caractérisé en ce que** le harnais de chien comprend une source lumineuse.

15. Harnais de chien selon l'une des revendications 1 à 14, **caractérisé en ce qu'**au moins le sangle de poitrine (3) et/ou le sangle abdominale (1) comprend un élément de fixation pour attacher des éléments fonctionnels, auquel élément de fixation on peut attacher un objet de décoration, de préférence à des fins de décoration.
